(19) Europäisches Patentamt
European Patent Office
Office européen des brevets

(11) Veröffentlichungsnummer: **0 069 062**
**B1**

# (12) EUROPÄISCHE PATENTSCHRIFT

(45) Veröffentlichungstag der Patentschrift: **29.05.85**

(51) Int. Cl.⁴: **C 07 C 87/50**, C 07 C 87/38

(21) Anmeldenummer: **82810251.7**

(22) Anmeldetag: **14.06.82**

(54) **Aminoalkylsubstituierte aromatische Amine und ein Verfahren zu deren Herstellung.**

(30) Priorität: **19.06.81 GB 8119007**

(43) Veröffentlichungstag der Anmeldung:
**05.01.83 Patentblatt 83/1**

(45) Bekanntmachung des Hinweises auf die Patenterteilung:
**29.05.85 Patentblatt 85/22**

(84) Benannte Vertragsstaaten:
**CH DE FR GB IT LI NL**

(56) Entgegenhaltungen:
**DE - A - 2 549 403**
**US - A - 4 288 625**

(73) Patentinhaber: **CIBA-GEIGY AG, Postfach, CH-4002 Basel (CH)**

(72) Erfinder: **Howell, Frederick Harold, Dr., 27 High Bank, Atherton Lancashire M29 9HZ (GB)**

EP 0 069 062 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue aminoalkyl-substituierte Amine und ein Verfahren zu deren Herstellung.

Die DE-OS 2 549 403 beschreibt 1,10-substituierte 1,10-Diaminodecane und deren Verwendung als Härter für Epoxidharze.

Gegenstand der Erfindung sind aminoalkyl-substituierte aromatische Amine der Formel I

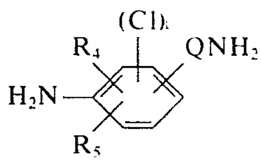

(I)

worin k 0 oder 1 ist, $-QNH_2$ eine Gruppe der Formel II

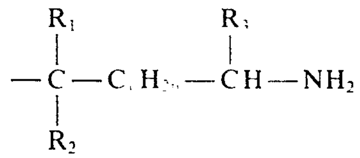

(II)

darstellt, der in ortho- oder para-Stellung zur Aminogruppe an den Benzolring gebunden ist und worin n eine ganze Zahl von 1 bis 15, $R_1$ $C_{1-8}$-Alkyl, $R_2$ $C_{1-4}$-Alkyl oder $R_1$ und $R_2$ zusammen eine $C_{4-7}$-Alkylengruppe, $R_3$ Wasserstoff, $C_{1-6}$-Alkyl, $C_{3-8}$-Cycloalkyl oder $C_{6-10}$-Aryl und $R_4$ und $R_5$ Wasserstoff oder $C_{1-4}$-Alkyl darstellen, sowie die entsprechenden Salze von Verbindungen der Formel I mit organischen oder anorganischen Säuren. Die Alkylgruppe $R_1$ kann geradkettig oder verzweigt sein und z. B. eine Methyl-, Äthyl-, n-Propyl-, Isopropyl-, n-Butyl-, Isobutyl-, sek.-Butyl-, n-Amyl-, n-Hexyl-, Hept-3-yl- oder n-Octylgruppe darstellen.

Wenn $R_2$, $R_4$ und/oder $R_5$ Alkylgruppen darstellen, so kann es sich um geradkettige oder verzweigte Gruppen, wie z. B. die Methyl-, Äthyl-, n-Propyl-, Isopropyl-, n-Butyl-, Isobutyl- oder sek.-Butylgruppe, handeln.

Stellen $R_1$ und $R_2$ zusammen eine Alkylengruppe dar, so kann es sich z. B. um eine Butylen-, Pentylen-, Hexylen- oder Heptylengruppe handeln. $R_3$ in der Bedeutung einer Alkylgruppe kann geradkettig oder verzweigt sein und stellt z. B. eine Methyl-, Äthyl-, n-Propyl-, Isopropyl-, n-Butyl-, sek.-Butyl-, Amyl- oder Hexylgruppe dar. Beispiele für die Cycloalkylgruppe $R_3$ sind die Cyclopropyl-, Cyclobutyl-, Cyclopentyl-, Cyclohexyl-, Cycloheptyl- oder Cyclooctylgruppe. Stellt $R_3$ eine Arylgruppe dar, so handelt es sich z. B. um eine Phenyl- oder Naphthylgruppe.

Als Beispiele von Salzen von Verbindungen der Formel I seien genannt: Hydrochloride, Sulfate, Nitrate, Phosphate, Methansulfonate, Methanphosphonate, p-Toluolsulfonate, Acetate, Benzoate, Oxalate, Succinate und Maleate.

Bevorzugt sind Verbindungen der Formel I, worin k 0 ist und $R_4$, $R_5$ und $-QNH_2$ die oben angegebene Bedeutung haben. Besonders bevorzugt sind Verbindungen der Formel I, worin k 0 ist, $R_4$ und $R_5$ unabhängig voneinander Wasserstoff oder $C_{1-3}$-Alkyl, und $-QNH_2$ eine Restgruppe der Formel II darstellen, worin n 3 bis 9, $R_1$ $C_{1-6}$-Alkyl, $R_2$ Methyl oder Äthyl und $R_3$ $C_{1-6}$-Alkyl bedeuten.

Ganz besonders bevorzugt sind Verbindungen der Formel I, worin $R_4$ und $R_5$ je Wasserstoff oder Methyl, $-QNH_2$ eine Gruppe der Formel II mit n = 3, 8 oder 9, $R_1$ $C_{1-3}$-Alkyl, $R_2$ Methyl oder Äthyl und $R_3$ $C_{1-3}$-Alkyl bedeuten und k 0 ist.

Am meisten bevorzugt sind Verbindungen der Formel I, worin $R_4$ und $R_5$ je Wasserstoff, $-QNH_2$ eine Gruppe der Formel II mit n = 3, 8 oder 9, $R_1$ $C_{1-4}$-Alkyl, $R_2$ Methyl oder Äthyl und $R_3$ Methyl oder Isopropyl bedeuten und k 0 ist.

Als Beispiele von Verbindungen der Formel I seien genannt:

2-Amino-6-(4-aminophenyl)-6-methyl-heptan,
2-Amino-6-(4-amino-3-methylphenyl)-6-methyl-heptan,
2-Amino-6-(2-amino-5-methylphenyl)-6-methyl-heptan,
2-Amino-6-(4-amino-3,5-dimethylphenyl)-6-methyl-heptan,
2-Amino-6-(4-amino-3-ethylphenyl)-6-methyl-heptan,
2-Amino-6-(4-amino-3,5-diäthylphenyl)-6-methyl-heptan,
2-Amino-6-(4-amino-3-isopropylphenyl-6-methyl-heptan,
2-Amino-6-(4-amino-3,5-diisopropylphenyl)-6-methyl-heptan,
2-Amino-6-(4-amino-3-methyl-5-isopropylphenyl)-6-methyl-heptan,
2-Amino-6-(4-amino-3-ethyl-5-sek.-butylphenyl)-6-methyl-heptan,
2-Amino-6-(4-amino-3-chlorphenyl)-6-methyl-heptan,
2-Amino-6-(4-amino-3-chloro-5-methylphenyl)-6-methyl-heptan,

2-Amino-6-(4-amino-3,5-di-sek.-butylphenyl)-6-methyl-heptan,
2-Amino-6-(4-amino-3-methyl-5-ethylphenyl)-6-methyl-heptan,
2-Amino-6-(4-amino-3-methyl-5-sek.-butylphenyl)-6-methyl-heptan,
3-Amino-12-(4-aminophenyl)-2,12-dimethyl-tetradecan,
3-Amino-12-(4-amino-3-methylphenyl)-2,12-dimethyl-tetradecan,
3-Amino-12-(2-amino-5-methylphenyl)-2,12-dimethyl-tetradecan,
3-Amino-12-(4-amino-3,5-dimethylphenyl)-2,12-dimethyl-tetradecan,
3-Amino-12-(4-amino-3-äthylphenyl)-2,12-dimethyl-tetradecan,
3-Amino-12-(4-amino-3-isopropylphenyl)-2,12-dimethyl-tetradecan,
3-Amino-12-(4-amino-3-methyl-5-isopropylphenyl)-2,12-dimethyl-tetradecan,
3-Amino-13-(4-aminophenyl)-2,13-dimethyl-tetradecan,
3-Amino-13-(4-amino-3-methylphenyl)-2,13-dimethyl-tetradecan,
3-Amino-13-(2-amino-5-methylphenyl)-2,13-dimethyl-tetradecan,
3-Amino-13-(4-amino-3,5-dimethylphenyl)-2,13-dimethyl-tetradecan,
3-Amino-13-(4-amino-3-äthylphenyl)-2,13-dimethyl-tetradecan,
3-Amino-13-(4-amino-3-isopropylphenyl)-2,13-dimethyl-tetradecan,
3-Amino-13-(4-amino-3-methyl-5-isopropylphenyl)-2,13-dimethyl-tetradecan,
1-Amino-11-(4-aminophenyl)-2,11-dimethyl-dodecan,
1-(4-Aminophenyl)-1-(9-amino-9-cyclohexyl-non-1-yl)-cyclohexan,
1-Amino-10-(4-aminophenyl)-10-methyl-1-phenyl-decan.

Gegenstand vorliegender Erfindung ist auch ein Verfahren zur Herstellung von Verbindungen der Formel I und deren Salzen mit organischen oder anorganischen Säuren, indem man ein aromatisches Amin der Formel III

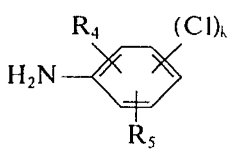

(III)

worin k, R und $R_5$ die oben angegebene Bedeutung haben und worin im Benzolring mindestens einer der ortho- oder para-Stellungen zur Aminogruppe unsubstituiert ist, mit als Alkylierungsmittel dienenden Aminoalkoholen, Aminoolefinen oder Diaminen oder Salzen davon mit organischen oder anorganischen Säuren, die zur Einführung einer Gruppe der Formel II

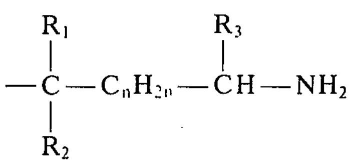

(II)

in das Amin der Formel III befähigt sind, umsetzt, wobei die Umsetzung in Gegenwart eines Friedel-Crafts-Katalysators in saurem Medium und bei erhöhter Temperatur durchgeführt wird.

Beispiele von Aminen der Formel III sind: Anilin, o-, m- und p-Toluidin, o-Äthylanilin, o-Isopropylanilin, o-sek.-Butylanilin, o-Chloranilin, 2,6-Dimethylanilin, 2,6-Diäthylanilin, 2,6-Diisopropylanilin, 2-Methyl-6-äthyl-anilin, 2-Methyl-6-isopropylanilin, 2-Methyl-6-sek.-butylanilin, 2-Äthyl-6-sek.-butylanilin, 2-Chlor-5-methylanilin, 2-Chlor-6-methylanilin, 5-Chlor-2-methylanilin.

Als eine Gruppe der Formel II einführende Alkylierungsmittel verwendet man bevorzugt Aminoalkohole oder Salze davon mit organischen oder anorganischen Säuren.

Das Mol-Verhältnis von Amin der Formel III zu Alkylierungsmittel kann zwischen 10 : 1 bis 1 : 3 liegen. Bei Verwendung eines Überschuß an Amin der Formel III, kann dieses überschüssige Amin zurückgewonnen und wiederverwendet werden, z. B. mittels Destillation.

Die Umsetzung des aromatischen Amins der Formel III mit dem Alkylierungsmittel wird vorzugsweise in Gegenwart eines Metallsalzes als Co-Katalysator und gegebenenfalls bei Überdruck durchgeführt.

Alkylierungsmittel, die mit den Aminen der Formel III umgesetzt werden, enthalten ein reaktives Zentrum, z. B. eine olefinische, eine Hydroxy- oder Aminogruppe, die im Verlaufe der Alkylierungsreaktion eliminiert, umgewandelt oder umgelagert wird.

Die Umsetzung wird bei erhöhter Temperatur durchgeführt, z. B. bei einer Temperatur zwischen 100 und 250°C, bevorzugt zwischen 170 und 190°C. Es kann bei Normaldruck oder Überdruck gearbeitet werden. Überdruck kann in geeigneten Druckgefäßen angewandt werden, z. B. zugeschmolzenen Glasreaktoren oder säurebeständigen Druckgefäßen, wie mit Tantal ausgekleidete Reaktoren. Wird Überdruck angewandt, so sind Drucke unter 100 Atmosphären bevorzugt.

Ein wesentliches Merkmal des erfindungsgemäßen Verfahrens ist die Verwendung einer Säure als Katalysator. Die Säure kann anorganisch oder organisch sein. Auch ein teilweises Salz einer mehrbasischen organischen oder anorganischen Säure kann verwendet werden. Beispiele solcher Säuren sind Chlorwasserstoffsäure, Schwefelsäure und Orthophosphorsäure; alkyl-, aryl- oder alkaryl-substituierte anorganische Säuren, z. B. Methan- oder Äthansulfonsäuren, Benzolsulfonsäure, p-Toluolsulfonsäure und Methanphosphonsäure; Dichloressigsäure, Trichloressigsäure oder Trifluoressigsäure.

Der Gehalt an saurem Katalysator pro Mol aromatisches Amin liegt bevorzugt im Bereich von 0,25 bis 1,5 Mol und besonders 0,5 bis 1,0 Mol. Als Säure wird Chlorwasserstoffsäure bevorzugt.

Die Alkylierung wird mit Vorteil in Gegenwart eines Co-Katalysators, z. B. eines Metallsalzes, wie Carbonats, eines Oxides oder Hydroxides eines Metalls der Gruppen II, III oder VIII des Periodischen Systems, vorgenommen. Bevorzugte Metalle sind Mg, Cd, Zn, Al, Fe, Co und Ni.

Als Metallsalze sind diejenigen bevorzugt, welche mit der für die Katalysierung der Reaktion eingesetzten Säure das Ion teilen, z. B. ein Halogenid, Sulfat oder Phosphat. Wird als Co-Katalysator ein Metallcarbonat, -oxid oder -hydroxid verwendet, so sollte die für die Katalysierung der Alkylierungsreaktion verwendete Säure in einer für die Salzbildung ausreichenden Menge oder darüber eingesetzt werden.

Das Metallsalz kann in Konzentration bis zu 1,0 Mol, vorzugsweise im Bereich von 0,25 bis 0,5 Mol, pro Mol aromatisches Amin, vorliegen. Das bevorzugte Metallhalogenid als Co-Katalysator ist $ZnCl_2$.

Bei einer Ausführungsform des erfindungsgemäßen Verfahrens ist Wasser im Reaktionsgemisch vorhanden. Die Wassermenge beträgt mindestens 30 Gew.-%, bezogen auf die eingesetzte Säure. Das Vorliegen dieser beträchtlichen Menge Wasser, bezogen auf die Säure, ist notwendig (wichtig) um sicherzustellen, daß das Reaktionsgemisch eine homogene Lösung bildet. Bei der bevorzugten Verwendung von Chlorwasserstoffsäure als Säure liegt die bevorzugte Menge Wasser bei 64 Gew.-% Wasser bezogen auf HCl, d. h., es wird handelsübliche konzentrierte Chlorwasserstoffsäure (36%ig) verwendet. Bezogen auf das gesamte Reaktionsgemisch müssen selbstverständlich im Interesse einer wirtschaftlichen Ausbeute einem bestimmten Reaktorvolumen große Überschüsse an Wasser vermieden werden.

Gewünschtenfalls kann ein weiteres Lösungsmittel verwendet werden, unter der Voraussetzung, daß es unter den Reaktionsbedingungen inert ist.

Gemäß einer weiteren Ausführungsform der Erfindung kann die Umsetzung bei Atmosphärendruck (Normaldruck) und Temperaturen zwischen 100 und 200°C, bevorzugt 170 bis 190°C, durchgeführt werden. Diese Temperatur wird beim Arbeiten bei Normaldruck dadurch erreicht, daß man das Wasser destillativ entfernt. Wasser ist dann vorhanden, wenn aus wäßriger Chlorwasserstoffsäure formulierte Reaktionsgemische verwendet werden, oder bei der Verwendung von Hydroxyalkylamino-Alkylierungsmitteln wird Wasser gebildet. Um die bevorzugte Reaktionstemperatur von 170–190°C zu erreichen, muß das ganze aus diesen Quellen stammende Wasser entfernt werden.

Nach Beendigung der Alkylierung wird das alkylierte aromatische Amin durch Behandlung mit einer Base von der Säure oder vom Säure/Metallsalz-Komplex befreit. Geeignete Basen zu diesem Zweck sind z. B. Alkalimetallhydroxide, -carbonate, -bicarbonate und Ammoniumhydroxid. Bevorzugte Basen sind Natrium- und Ammoniumhydroxid. Diese Basen werden besonders dann bevorzugt, wenn der Co-Katalysator $ZnCl_2$ ist, wobei die anfänglich ausgefüllten basischen Zinksalze durch überschüssige Base wieder leicht gelöst werden und ein einfaches Isolieren des alkylierten aromatischen Amins ermöglichen.

Die im erfindungsgemäßen Verfahren verwendeten Alkylierungsmittel können Olefine, Alkohole oder Alkylamine sein, die zum Einführen einer Gruppe der Formel II in den Benzolkern des aromatischen Amins der Formel III befähigt sind. Das in Alkylierungsmitteln enthaltene reaktive Zentrum kann eine OH-Gruppe, eine olefinische Bindung oder eine $NH_2$-Gruppe an einem teriären C-Atom sein.

Verbindungen, die zur Einführung von Gruppen der Formel II in das Molekül des aromatischen Systems der Formel III befähigt sind, umfassen z. B. Verbindungen der Formel IVa

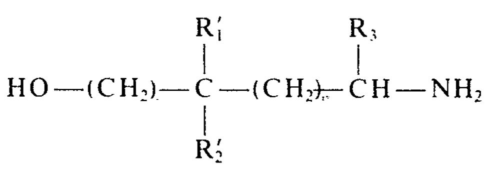

(IVa)

worin $R_3$ die oben angegebene Bedeutung hat, wenn m = 0, ist n = 1–15, $R'_1$ ist $C_{1-8}$-Alkyl, $R'_2$ ist $C_{1-..}$-Alkyl oder $R'_1$ und $R'_2$ bilden zusammen mit dem C-Atom, an das sie gebunden sind, eine $C_{5-8}$-Cycloalkylengruppe und wenn m = 1, ist n = 1–14, $R'_1$ ist $C_{1-7}$-Alkyl, $R'_2$ ist Wasserstoff oder $C_{1-3}$-Alkyl oder $R'_1$ und $R'_2$ bilden zusammen mit dem C-Atom, an das sie gebunden sind, eine $C_{5-7}$-Cycloalkylengruppe. Wenn m in Verbindungen der Formel IVa 1 ist, erfolgt eine Verschiebung der Methylengruppe $(CH_2)_m$ in eine der Gruppen $R'_1$, $R'_2$ oder $-C_nH_{2n}-$, so daß sich die C-Zahl dieser Gruppe um eines erhöht.

Beispiele von Verbindungen der Formel IVa sind solche, worin m = 0, n = 3 und $R'_1$, $R'_2$ und $R_3$ je Methyl sind; m = 0, n = 8, $R'_1$ und R' = je Methyl und $R_3$ = Isopropyl sind; und m = 1, n = 8, und $R'_1$, $R'_2$ und $R_3$ folgende Reste darstellen:

| $R_1'$ | $R_2'$ | $R_3$ |
|---|---|---|
| $CH_3$ | $CH_3$ | $C_2H_5$ |
| $CH_3$ | $CH_3$ | iso-$C_3H_7$ |
| $C_3H_7$ | $C_3H_7$ | $CH_3$ |
| $C_2H_5$ | $C_2H_5$ | $C_4H_9$ |
| 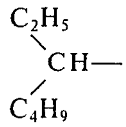 | $C_2H_5$ | $C_4H_9$ |
| $C_2H_5$ | $C_2H_5$ | $(C_2H_5)_2CH-$ |
| $CH_3$ | H | $C_6H_5$ |
| $R_1' + R_2'$ $-(CH_2)_5-$ | | 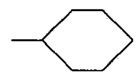 |

Weitere Verbindungen, die zur Einführung von Gruppen der Formel II geeignet sind, sind z. B. 11-Aminoundecanole der Formel IVb

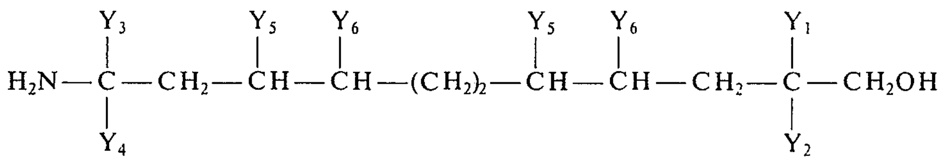

(IVb)

wobei $Y_1$ und $Y_3$ unabhängig voneinander Wasserstoff oder $C_{1-8}$-Alkyl, $Y_2$ und $Y_4$ unabhängig voneinander $C_{1-8}$-Alkyl oder $Y_1$ und $Y_2$ und/oder $Y_3$ und $Y_4$ zusammen mit dem Bindungs-C-Atom einen $C_{.8}$-aliphatischen Ring bilden und $Y_5$ und $Y_6$ unabhängig voneinander Wasserstoff oder $C_{1-.}$-Alkyl bedeuten.

Diese 11-Aminoundecanole und das Verfahren zu deren Herstellung sind in der Deutschen Offenlegungsschrift 2 831 299 näher beschrieben.

Besonders bevorzugt sind Heptaminol [2-Amino-6-hydroxy-6-methylheptan) und 11-Amino-2,2,12-trimethyl-tridecan-1-ol.

Beispiele von Aminoolefinen (IV), die zur Einführung von Gruppen der Formel II in das Molekül des aromatischen Systems der Formel III befähigt sind, sind 2-Amino-6-methyl-hept-5-en und 2-Amino-6-methyl-hept-6-en.

Als Beispiel eines Diamins der Formel IV mit einer Aminogruppe an einem tertiären C-Atom, das zur Einführung einer Gruppe der Formel II in das Molekül des aromatischen Systems der Formel III verwendet werden kann, sei 1,11-Diamino-2,11-dimethyl-dodecan genannt.

Die Verbindungen der Formel I sind wertvolle Zwischenprodukte, z. B. zur Herstellung von neuen transparenten Polyamiden, die sich durch verbesserte thermoplastische Verarbeitbarkeit, gute Kochwasserbeständigkeit sowie niedrige Wasseraufnahme, hohe Hydrolysebeständigkeit, gute Dimensionsstabilität unter dem Einfluß von Feuchtigkeit und entsprechend verbesserte mechanische und elektrische Eigenschaften auszeichnen.

Die neuen Polyamide haben eine reduzierte spezifische Viskosität von mindestens 0,3 dl/g, bevorzugt etwa 0,5 bis etwa 2,0 dl/g und insbesondere etwa 0,7 bis etwa 1,8 dl/g, gemessen an einer 0,5%igen Lösung in m-Kresol bei 25°C, und bestehen aus wiederkehrenden Strukturelementen der Formel V

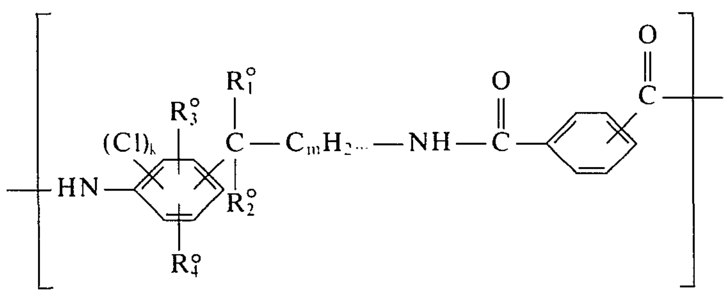

(V)

worin R 0 oder 1 ist, die Brücke in o- oder p-Stellung zur Aminogruppe an den Benzolkern gebunden ist und worin m eine ganze Zahl von 4—16, $R_1^o$ $C_{1-3}$-Alkyl, $R_2^o$ $C_{1-6}$-Alkyl und $R_3^o$ und $R_4^o$ unabhängig voneinander Wasserstoff oder $C_{1-3}$-Alkyl bedeuten, wobei die Carbonylgruppen in den Strukturelementen der Formel V in 1,3- und/oder 1,4-Stellung an den Benzolring gebunden sind.

In den folgenden Beispielen bedeuten Teile und Prozente Gewichtsteile bzw. Gewichtsprozente. Die Temperaturen sind in °C angegeben.

## Beispiel 1

Zu einer Lösung von 102 Teilen wasserfreiem Zinkchlorid in 153 Teilen 36%iger wäßriger Chlorwasserstoffsäure und 200 Teilen Wasser gibt man 140 Teile Anilin und 136 Teile 6-Hydroxy-6-methyl-2-heptylamin-hydrochlorid (Heptaminol-Hydrochlorid). Das Reaktionsgemisch wird in einen mit Tantal ausgekleideten 1-Liter-Autoklaven gegeben und 24 Stunden bei 185° gerührt. Nach dem Entfernen aus dem Autoklaven wird das Reaktionsgemisch mit einer heißen Lösung von 750 Teilen Natriumhydroxid in 1500 Teilen Wasser versetzt und bis zum Abkühlen gerührt. Die organische Phase wird mit Diäthyläther extrahiert, mit Wasser gewaschen, verdampft und unter Druck destilliert.

Nach der Rückgewinnung von 58 Teilen Anilin erhält man 135 Teile 2-Amino-6-(4-aminophenyl)-6-methylheptan, Sdp. 138—140°C bei 0,7 mbar (85% d. Th., bezogen auf das Heptaminol). Die Elementaranalyse ergibt folgenden Gehalt an C, H und N:

| | | | |
|---|---|---|---|
| gefunden | C 76,36 | H 11,27 | N 13,01 |
| berechnet für $C_{14}H_{24}N_2$ | C 76,31 | H 10,98 | N 12,71 |

Die in Tabelle I aufgeführten Verbindungen gemäß Beispielen 2—12 werden auf analoge Weise aus Heptaminol-Hydrochlorid hergestellt.

Tabelle I

| Beispiel Nr. | Aromatisches Amin | Verbindung der Formel I | Siedebereich °C Druck | Molekular-Formel | Analyse % gefunden und berechnet C | H | N |
|---|---|---|---|---|---|---|---|
| 2 | o-Toluidin | 2-Amino-6-(4-amino-3-methylphenyl-6-methyl-heptan | 192–6<br>13 mbar | $C_{15}H_{26}N_2$ | 76,87<br>76,56 | 11,18<br>11,49 | 11,95<br>12,25 |
| 3 | p-Toluidin | 2-Amino-6-(2-amino-5-methylphenyl)-6-methyl-heptan | 120–30<br>0,3 mbar | $C_{15}H_{26}N_2$ | 75,65<br>76,56 | 12,81<br>11,49 | 11,44<br>12,25 |
| 4 | 2,6-Dimethylanilin | 2-Amino-6-(4-amino-3,5-dimethylphenyl)-6-methyl-heptan | 126–30<br>0,07 mbar | $C_{16}H_{28}N_2$ | 77,11<br>77,36 | 11,06<br>11,36 | 11,28<br>11,28 |
| 5 | 2-Äthylanilin | 2-Amino-6-(4-amino-3-äthylphenyl)-6-methyl-heptan | 188–94<br>13 mbar | $C_{16}H_{28}N_2$ | 77,36<br>77,36 | 11,78<br>11,36 | 10,96<br>11,28 |
| 6 | 2,6-Diäthylanilin | 2-Amino-6-(4-amino-3,5-diäthylphenyl)-6-methyl-heptan | 196–200<br>13 mbar | $C_{18}H_{32}N_2$ | 78,59<br>78,20 | 12,28<br>11,67 | 10,18<br>10,13 |
| 7 | 2-Isopropylanilin | 2-Amino-6-(4-amino-3-isopropylphenyl)-6-methyl-heptan | 190–8<br>16 mbar | $C_{17}H_{30}N_2$ | 78,07<br>77,80 | 11,76<br>11,52 | 10,67<br>10,67 |
| 8 | 2,6-Diisopropylanilin | 2-Amino-6-(4-amino-3,5-diisopropylphenyl)-6-methyl-heptan | 210–6<br>16 mbar | $C_{20}H_{36}N_2$ | 78,08<br>78,88 | 11,88<br>11,92 | 10,03<br>9,20 |
| 9 | 2-Methyl-6-iso propylanilin | 2-Amino-6-(4-amino-3-methyl-5-isopropyl-phenyl)-6-methyl-heptan | 190–200<br>16 mbar | $C_{18}H_{32}N_2$ | 78,56<br>78,20 | 11,49<br>11,67 | 10,09<br>10,13 |
| 10 | 2-Methyl-6-tert.-butylanilin | 2-Amino-6-(4-amino-3-methylphenyl)-6-methyl-heptan | 198–204<br>13 mbar | $C_{15}H_{26}N_2$ | | | |
| 11 | 2-Äthyl-6-sec.-butylanilin | 2-Amino-6-(4-amino-3-äthyl-5-sec.-butyl-phenyl)-6-methyl-heptan | 200–10<br>16 mbar | $C_{20}H_{36}N_2$ | 79,44<br>78,88 | 11,86<br>11,92 | 9,19<br>9,20 |
| 12 | 2-Chloroanilin | 2-Amino-6-(4-amino-3-chlorophenyl)-6-methyl-heptan | 192–7<br>13 mbar | $C_{14}H_{23}ClN_2$ | 66,15<br>65,99 | 9,43<br>9,10 | 12,70<br>10,99 |

Beispiel 13

123 Teile Anilin und 84 Teile 3-Amino-2,2-12-trimethyltridecan-13-ol werden in einer Lösung aus 166 Teilen 36%iger wäßriger Chlorwasserstoffsäure, 89 Teile wasserfreiem Zinkchlorid und 130 Teilen Wasser gelöst. Diese Lösung wird dann 90 Stunden bei 180° in einem 1-Liter-Tantal-Autoklaven gerührt. Das Reaktionsgemisch wird in 250 Teile Natriumhydroxid in 500 Teilen Wasser gegossen und dann wie in Beispiel 1 beschrieben aufgearbeitet. Die Destillation unter vermindertem Druck ergibt 85 Teile einer ersten Fraktion, die zur Hauptsache aus Anilin besteht, gefolgt von 62 Teilen eines Gemisches aus 3-Amino-12-(4-aminophenyl)-2,12-dimethyltetradecan und 3-Amino-13-(4-aminophenyl)-2,13-dimethyltetradecan; Siedebereich bei 0,1 mbar 184—188° (57% d. Th., bezogen auf den Aminotridecanol). die Elementaranalyse ergibt folgenden Gehalt an C, H und N:

| | | | |
|---|---|---|---|
| gefunden | C 79,19 | H 12,40 | N 8,46 |
| berechnet für $C_{22}H_{.0}N_2$ | C 79,45 | H 12,12 | N 8,43 |

Beispiel 14

9,3 Teile Anilin und 5,7 Teile 1,11-Diamino-2,11-dimethyldodecan werden in einer Lösung aus 15,3 Teilen 36%iger wäßriger Chlorwasserstoffsäure, 6,8 Teilen wasserfreiem Zink und 15 Teilen Wasser gelöst. Diese Lösung wird in einem Carius-Glasrohr eingeschmolzen und 10 Tage auf 185° erhitzt Das Reaktionsgemisch wird in 25 Teile Natriumhydroxid in 50 Teilen Wasser gegossen und dann wie in Beispiel 1 beschrieben aufgearbeitet. Die Destillation unter vermindertem Druck ergibt 4,7 Teile eines Vorlauf, gefolgt von 6,3 Teilen 1-Amino-11-(4-aminophenyl)-2,11-dimethyldodecan; Siedebereich bei 0,7 mbar 190—200° (77% d. Th., bezogen auf das Diaminododecan und 93%ige Reiheit). Die Elementaranalyse ergibt folgende Zusammensetzung in %:

| | | | |
|---|---|---|---|
| gefunden | C 78,11 | H 12,35 | N 9,97 |
| berechnet für $C_{20}H_{36}N_2$ | C 78,88 | H 11,92 | N 9,20 |

Beispiel 15

Eine Lösung von 35 Teilen wasserfreiem Zinkchlorid in 51 Teilen 36%iger wäßriger Chlorwasserstoffsäure wird mit 46,5 Teilen Anilin und 18,2 6-Hydroxy-6-methyl-2-heptylamin-hydrochlorid versetzt. Das Ganze wird in einen Dreihals-Rundkolben, der mit Thermometer, Rührwerk und Dean-Stark-Wasserabscheider ausgerüstet ist, gegeben. Das Reaktionsgemisch wird unter Rühren und Wasserabscheidung (nach Dean und Stark) mit einem elektrischen Heizmantel auf 185° erhitzt und dann während 18 Stunden bei dieser Temperatur belassen. Das heiße Reaktionsgemisch wird anschließend langsam in eine Lösung von 75 Teilen Natriumhydroxid in 75 Teilen Wasser gegossen und bis zum Abkühlen gerührt. Die organische Phase wird mit Diäthyläther extrahiert, mit Wasser gewaschen, verdampft und unter vermindertem Druck destilliert. Nach der Rückgewinnung von 28 Teilen Anilin erhält man 18 Teile 2-Amino-6-(4-aminophenyl)-6-methylheptan; Siedebereich bei 12 mbar 192—199° (82% d. Th., bezogen auf das Heptamino). Die Elementaranalyse ergibt die folgende Zusammensetzung in %:

| | | | |
|---|---|---|---|
| gefunden | C 76,56 | H 11,49 | N 12,25 |
| berechnet für $C_{15}H_{26}N_2$ | C 76,87 | H 11,18 | N 11,95 |

Beispiel 17

93 Teile Anilin, 122 Teile 36%ige wäßrige Chlorwasserstoffsäure, 68 Teile Zinkchlorid und 25,7 Teile 3-Amino-2,12,12-trimethyl-tridecan-13-ol werden wie in Beispiel 15 beschrieben umgesetzt und aufgearbeitet. Die Destillation unter vermindertem Druck ergibt 28 Teile 3-Amino-12-(4-aminophenyl)-2,12-dimethyl-tetradecan und 3-Amino-13-(4-aminophenyl)-2,13-dimethyltetradecan; Siedebereich bei 0,5 mbar 206—210° (84% d. Th., bezogen auf das Aminotridecanol). Die Elementaranalyse ergibt folgende Zusammensetzung in %:

| | | | |
|---|---|---|---|
| gefunden | C 79,06 | H 12,69 | N 7,99 |
| berechnet für $C_{22}H_{.0}N_2$ | C 79,45 | H 12,12 | N 8,42 |

Beispiel 18

93 Teile Anilin, 122 Teile 36%ige Salzsäure, 63 Teile Zinkchlorid und 24,3 Teile 3-Amino-12,12-dimethyl-tridecan-13-ol werden wie in Beispiel 15 beschrieben umgesetzt und aufgearbeitet. Die Destillation des Reaktionsproduktes unter verringertem Druck ergibt 25,5 Teile 3-Amino-12-(4-aminophenyl)-12-methyl-tetradecan und 3-Amino-13-(4-aminophenyl)-13-methyl-tetradecan mit dem Siedebereich bei 0,2 mbar von 188—198° (80%ige Ausbeute, bezogen auf das Aminotridecanol). Die Elementaranalyse ergibt folgende Zusammensetzung in %:

| | | | |
|---|---|---|---|
| gefunden | C 79,46 | H 11,42 | N 9,05 |
| berechnet für $C_{21}H_{38}N_2$ | C 79,18 | H 12,02 | N 8,79 |

Beispiel 19

93 Teile Anilin, 122 Teile 36%ige Salzsäure, 68 Teile Zinkchlorid und 25 Teile 1-(3-Amino-undec-11-yl)-1-(hydroxymethyl)-cyclohexan werden wie in Beispiel 15 beschrieben, umgesetzt und aufgearbeitet. Durch Destillation des Reaktionsproduktes erhält man 24,7 Teile 1-(4-Aminophenyl)-1-(3-amino-dodec-12-yl)-cyclohexan mit dem Siedebereich bei 0,4 mbar von 210—220° (78%ige Ausbeute, bezogen auf den Aminoalkohol). Die Elementaranalyse ergibt folgende Zusammensetzung in %:

| | | | |
|---|---|---|---|
| gefunden | C 79,66 | H 11,80 | N 8,18 |
| berechnet für $C_{24}H_{42}N_2$ | C 80,38 | H 11,81 | N 7,81 |

Beispiel 20

19,36 g (0,0878 Mol) 2-Amino-6-(4-aminophenyl)-6-methylheptan (Verbindung des Beispiels 1) und 27,97 g (0,0878 Mol) Isphthalsäurediphenylester werden in einen mit Rückflußkühler und Gaseinleitungsrohr versehenen 200-ml-Rundkolben eingewogen. Nachdem die Luft im Kolben mit Stickstoff vollständig verdrängt worden ist, wird der Kolben in ein 210° warmes Salzbad eingetaucht. Der Kolben wird unter Durchleiten eines schwachen Stickstoffstroms drei Stunden bei dieser Temperatur gehalten. Dann wird der Rückflußkühler durch eine Destillationsbrücke mit Vorlage ersetzt, und die Temperatur wird im Verlaufe einer Stunde auf 270° gesteigert. Dabei destilliert der größte Teil des abgespaltenen Phenols in die Vorlage über. Anschließend wird Wasserstrahlpumpenvakuum (ca. 2000 Pa) angelegt, und das restliche Phenol wird im Verlaufe von drei Stunden bei 270° abdestilliert. Man erhält eine viskose Polyamidschmelze, welche beim Abkühlen zu einer gelblichen durchsichtigen Masse erstarrt. 2—3 g des so hergestellten Polyamids werden mittels einer beheizbaren hydraulischen Presse zu einer Folie von ca. 0,3 bis 0,5 mm Dicke verpreßt. Die Folie wird bei Raumtemperatur einer relativen Luftfeuchtigkeit von 65% ausgesetzt, bis keine Gewichtszunahme mehr festgestellt werden kann. Die reduzierte Lösungsviskosität des erhaltenen Polyamids, gemessen an einer 0,5%igen Lösung in m-Kresol bei 25°C, beträgt 0,51 dl/g; die Glasumwandlungstemperatur Tg wird im Differentialkalorimeter (DSC) bestimmt und beträgt 159°.

**Patentansprüche**

1. Verbindungen der Formel I

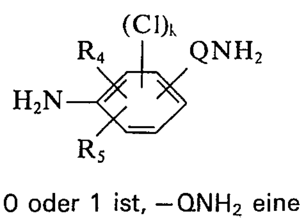

(I)

worin k 0 oder 1 ist, $-QNH_2$ eine Gruppe der Formel II

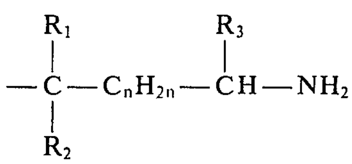

(II)

darstellt, der in ortho- oder para-Stellung zur Aminogruppe an den Benzolring gebunden ist und worin n eine ganze Zahl von 1 bis 15, $R_1$ $C_{1-8}$-Alkyl, $R_2$ $C_{1-4}$-Alkyl oder $R_1$ und $R_2$ zusammen eine $C_{4-7}$-Alkylengruppe, $R_3$ Wasserstoff, $C_{1-6}$-Alkyl, $C_{3-8}$-Cycloalkyl oder $C_{6-10}$-Aryl und $R_4$ und $R_5$ Wasserstoff oder $C_{1-4}$-Alkyl darstellen, sowie die entsprechenden Salze von Verbindungen der Formel I mit organischen oder anorganischen Säuren.

2. Verbindungen der Formel I nach Anspruch 1, worin k o ist.

3. Verbindungen der Formel I nach Anspruch 2, worin $R_4$ und $R_5$ unabhängig voneinander Wasserstoff oder $C_{1-3}$-Alkyl und $-QNH_2$ eine Restgruppe der Formel II gemäß Anspruch 1 darstellen, worin n 3 bis 9, $R_1$ $C_{1-6}$-Alkyl, $R_2$ Methyl oder Äthyl und $R_3$ $C_{1-6}$-Alkyl bedeuten.

4. Verbindungen der Formel I nach Anspruch 3, worin $R_4$ und $R_5$ je Wasserstoff oder Methyl, $-QNH_2$ eine Gruppe der Formel II nach Anspruch 1 mit n = 3, 8 oder 9, $R_1$ $C_{1-4}$-Alkyl, $R_2$ Methyl oder Äthyl und $R_3$ $C_{1-}$-Alkyl bedeuten.

5. Verbindungen der Formel I nach Anspruch 4, worin $R_4$ und $R_5$ je Wasserstoff und $R_3$ Methyl oder Isopropyl bedeuten.

6. Verfahren zur Herstellung von Verbindungen der Formel I und den entsprechenden Salzen von Verbindungen der Formel I mit anorganischen oder organischen Säuren nach Anspruch 1, dadurch gekennzeichnet, daß man ein aromatisches Amin der Formel III

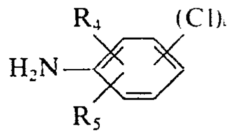

(III)

worin k, $R_4$ und $R_5$ die im Anspruch 1 angegebene Bedeutung haben und worin am Benzolring mindestens eine ortho- oder para-Stellungen zur Aminogruppe unsubstituiert ist, mit als Alkylierungsmittel dienenden Aminoalkoholen, Aminoolefinen oder Diaminen oder einem Salze davon mit einer organischen oder anorganischen Säure umsetzt, die befähigt sind, Gruppen der Formel II gemäß Anspruch 1 in das Amin der Formel III einzuführen, wobei die Umsetzung in Gegenwart eines Friedel-Crafts-Katalysators in saurem Medium bei erhöhter Temperatur durchgeführt wird.

7. Verfahren nach Anspruch 6, worin als Alkylierungsmittel ein Aminoalkohol oder ein Salz davon mit einer organischen oder anorganischen Säure verwendet wird.

8. Verfahren nach Anspruch 6 oder 7, worin das Mol-Verhältnis von Amin der Formel III zu Alkylierungsmittel im Bereich von 10 : 1 bis 1 : 3 liegt.

9. Verfahren nach Ansprüchen 6 bis 8, worin die Umsetzung zwischen dem Amin der Formel III und dem Alkylierungsmittel in Gegenwart eines Metallsalzes als Co-Katalysator und gegebenenfalls bei Überdruck durchgeführt wird.

## Claims

1. A compound of the formula I

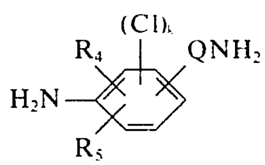

(I)

wherein k is 0 or 1, $-QNH_2$ is a group of formula II

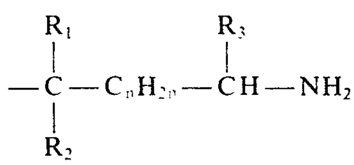

(II)

which is situated in one of the positions of the benzene rings ortho or para to the amino group and wherein n is an integer from 1 to 15, $R_1$ is $C_1-C_8$alkyl, $R_2$ is $C_1-C$ alkyl or $R_1$ und $R_2$ together are a $C-C$ alkylene group, $R_3$ is H or $C_1-C_6$alkyl, $C_3-C_8$cycloalkyl or $C_6-C_{10}$aryl; and $R_4$ and $R_5$ are H or $C_1-C$ alkyl; as well as a corresponding salt thereof with an organic or inorganic acid.

2. A compound of formula I according to claim 1, wherein k is 0.

3. A compound of formula I according to claim 2, wherein $R_4$ and $R_5$ are each independently H or $C_1-C_3$alkyl and $-QNH_2$ is agroup of formula II according to claim 1, wherein n is 3 to 9, $R_1$ is $C_1-C_6$alkyl, $R_2$ is methyl or ethyl, and $R_3$ is $C_1-C_6$alkyl.

4. A compound of formula I according to claim 3, wherein $R_4$ and $R_5$ are each H or methyl, $-QNH_2$ is a group of formula II according to claim 1, wherein n is 3, 8 or 9, $R_1$ is $C_1-C$ alkyl, $R_2$ is methyl or ethyl, and $R_3$ is $C_1-C$ alkyl.

5. A compound of formula I according to claim 4, wherein $R_4$ and $R_5$ are each H, and $R_3$ is methyl or isopropyl.

6. A process for the preparation of a compound of formula I or a corresponding salt thereof with an inorganic or organic acid according to claim 1, which process comprises alkylating an aromatic amine of the formula III

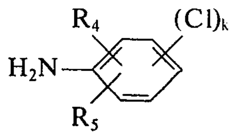

(III)

wherein k, $R_4$ and $R_5$ are as defined in claim 1 and wherein at least one ortho- or para-position of the benzene ring relative to the amino group is unsubstituted, with an aminoalcohol, amino-olefin or diamine, or a salt thereof with an organic or inorganic acid, which is capable of introducing a group of formula II according to claim 1 into the amine of formula III, said alkylation being effected in the presence of a Friedel-Crafts catalyst in acid medium and at elevated temperature.

7. A process according to claim 6, wherein the alkylating agent is an aminoalcohol or a salt thereof with an organic or inorganic acid.

8. A process according to either of claims 6 or 7, wherein the molar ratio of amine of formula III to alkylating agent is in the range from 10 : 1 to 1 : 3.

9. A process according to any one of claims 6 to 8, wherein the reaction of the amine of formula III with the alkylating agent is effected in the presence of a metal salt, as co-catalyst, and optionally at super-atmospheric pessure.

**Revendication**

1. Composés répondant à la formule I:

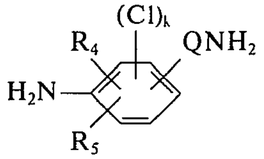

(I)

dans laquelle k est égal à 0 ou à 1, $-QNH_2$ représente un radical de formule II:

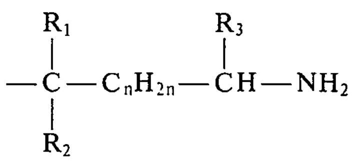

(II)

dans lequel n désigne un nombre entier de 1 à 15, $R_1$ représente un alkyle en $C_1-C_8$, $R_2$ un alkyle en $C_1-C_4$ ou $R_1$ et $R_2$ forment ensemble un alkylène en $C_4-C_7$, et $R_3$ représente l'hydrogène, un alkyle en $C_1-C_6$, un cycloalkyle en $C_3-C_8$ ou un aryle en $C_6-C_{10}$, le radical $-QNH_2$ occupant, sur le noyau benzénique, une position ortho ou para relativement au radical amino, et $R_4$ et $R_5$ représentent chacun l'hydrogène ou un alkyle en $C_1-C_4$, ainsi que les sels que forment les composés de formule I avec des acides minéraux ou organiques.

2. Composés de formule I selon la revendication 1 dans lesquels k est égal à 0.

3. Composés de formule I selon la revendication 2 dans lesquels $R_4$ et $R_5$ représentent chacun, indépendamment l'un de l'autre, l'hydrogène ou un alkyle en $C_1-C_3$, et $-QNH_2$ représente un radical de formule II selon la reven dication 1 dans lequel n est un nombre de 3 à 9, $R_1$ représente un alkyle en $C_1-C_6$, $R_2$ un méthyle ou un éthyle et $R_3$ un alkyle en $C_1-C_6$.

4. Composés de formule I selon la revendication 3 dans lesquels $R_4$ et $R_5$ représentent chacun l'hydrogène ou un méthyle, $-QNH_2$ représente un radical de formule II selon la revendication 1 dans lequel n est égal à 3, à 8 ou à 9, $R_1$ représente un alkyle en $C_1-C_4$, $R_2$ un méthyle ou un éthyle et $R_3$ un alkyle en $C_1-C_4$.

5. Composés de formule I selon la revendication 4 dans lesquels $R_4$ et $R_5$ représentent chacun l'hydrogène et $R_3$ représente un méthyle ou un isopropyle.

6. Procédé de préparation de composés de formule I et de sels de composés de formule I avec des acides minéraux ou organiques, selon la revendication 1, procédé caractérisé en ce qu'on fait réagir une amine aromatique répondant à la formule III:

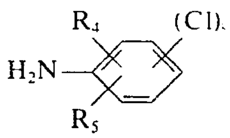

(III)

dans laquelle k, R  et $R_5$ ont les significations données à la revendication 1 et dans laquelle le noyau benzénique est dépourvu de substituant en au moins l'une des positions ortho et para relativement au radical amino, avec un agent d'alkylation qui est un amino-alcool, une aminooléfine ou une diamine, ou un sel formé par un tel composé avec un acide minéral ou organique, et qui est capable d'introduire un radical de formule II selon la revendication 1 dans l'amine de formule III, la réaction étant effectuée en présence d'un catalyseur de Friedel-Crafts, en milieu acide et à température élevée.

7. Procédé selon la revendication 6 selon lequel on utilise, comme agent d'alkylation, un amino-alcool ou un sel d'un amino-alcool avec un acide minéral ou organique.

8. Procédé selon l'une des revendications 6 et 7, caractérisé en ce que le rapport molaire de l'amine de formule III à l'agent d'alkylation est compris entre 10 : 1 et 1 : 3.

9. Procédé selon l'une quelconque des revendications 6 à 8, selon lequel la réaction entre l'amine de formule III et l'agent d'alkylation est effectuée en présence d'un sel métallique, qui joue le rôle de co-catalyseur, et, éventuellement, sous une surpression.